# NEUE EUROPÄISCHE PATENTSCHRIFT

(11) **EP 3 135 932 B2**
(45) Veröffentlichungstag und Bekanntmachung des Hinweises auf die Entscheidung über den Einspruch: **08.04.2026**
(45) Hinweis auf die Patenterteilung: 31.10.2018
(21) Anmeldenummer: 15182204.6
(22) Anmeldetag: 24.08.2015
(51) Int. Cl.: F16C 32/04, F04D 19/04, F04D 29/058

(54) **VAKUUMPUMPE UND PERMANENTMAGNETLAGER**
VACUUM PUMP AND PERMANENT MAGNET BEARING
POMPE A VIDE ET PALIER A AIMANT PERMANENT

(43) Veröffentlichungstag der Anmeldung: 01.03.2017
(73) Patentinhaber: PFEIFFER VACUUM GMBH, 35614 Asslar (DE)
(72) Erfinder: Conrad, Armin, 35745 Hörbach (DE); Mädler, Matthias, 35759 Driedorf (DE)
(74) Vertreter: Manitz Finsterwald Patent- und Rechtsanwaltspartnerschaft mbB

(56) Entgegenhaltungen:
- CN-A- 104 712 655
- DE-A1- 10 358 341
- DE-A1- 102013 218 220
- DE-U- 1 888 854
- JP-A- 2010 053 947
- US-A1- 2004 227 421
- YONNET J P ET AL: "STACKED STRUCTURES OF PASSIVE MAGNETIC BEARINGS", JOURNAL OF APPLIED PHYSICS, AMERICAN INSTITUTE OF PHYSICS, US, vol. 70, no. 10 PT 02, 15 November 1991 (1991-11-15), pages 6633 - 6635, XP000281729, ISSN: 0021-8979, DOI: 10.1063/1.349857
- BRAD PADEN ET AL.: "Design Formulas for Permanent-Magnet Bearings", TRANSACTIONS OF THE ASME, December 2003 (2003-12-01), pages 734 - 738, XP055629813

## Beschreibung

Die vorliegende Erfindung betrifft unter anderem ein Permanentmagnetlager gemäß dem Oberbegriff des Anspruchs 1 zur drehbaren Lagerung eines Rotors der Vakuumpumpe, wobei das Permanentmagnetlager wenigstens einen statorseitigen Ringmagnet und einen am Rotor angeordneten rotorseitigen Ringmagnet aufweist, wobei einer der beiden Ringmagnete ein innerer Ringmagnet ist, welcher radial innerhalb des anderen, äußeren Ringmagnets und konzentrisch mit dem äußeren Ringmagnet angeordnet ist, wobei zwischen der nach radial außen gewandten Außenseite des inneren Ringmagnets und der gegenüberliegenden, nach radial innen gewandten Innenseite des äußeren Ringmagnets ein radialer Spalt mit einer in radialer Richtung verlaufenden Spaltbreite vorgesehen ist. Derartige Permanentmagnetlager sind beispielsweise aus den Druckschriften DE 18 888 854 U, DE 103 58 341 A1 sowie aus dem Aufsatz von Jean-Paul Yonnet mit dem Titel "Stacked structures of passive magnetic bearings" bekannt.

Vakuumpumpen der eingangs genannten Art sind bekannt, beispielweise aus der DE 10 2013 218 220 A1. Bei derartigen Vakuumpumpen wird das Permanentmagnetlager primär als hochvakuumseitiges Lager für den Rotor der Vakuumpumpe eingesetzt. Es dient dabei zur Lagerung des Rotors der Vakuumpumpe in radialer Richtung. Dabei stellt die sog. radiale Steifigkeit des Permanentmagnetlagers eine wesentliche Größe für die sichere Lagerung des Rotors in der Vakuumpumpe dar.

Der vorliegenden Erfindung liegt die Aufgabe zugrunde, ein Permanentmagnetlager bzw. eine Vakuumpumpe mit einem Permanentmagnetlager bereitzustellen, das im Hinblick auf seine radiale Steifigkeit verbessert ist.

Die Aufgabe wird durch eine Turbomolekularpumpe mit den Merkmalen des Anspruchs 1 gelöst.

Die Aufgabe wird insbesondere dadurch gelöst, dass eine Vakuumpumpe der eingangs genannten Art dadurch weitergebildet wird, dass die in axialer Richtung verlaufende Höhe des äußeren Ringmagnets und/oder des inneren Ringmagnets im Bereich zwischen einschließlich dem 3-fachen und einschließlich dem 5-fachen der Spaltbreite liegt.

Es wurde erkannt, dass die Lagersteifigkeit von dem Verhältnis zwischen dem Magnetlagerspalt und der in axialer Richtung gemessenen Höhe des äußeren Ringmagnets und/oder des inneren Ringmagnets abhängt. Dabei wurde insbesondere festgestellt, dass sich eine optimale Lagersteifigkeit erreichen lässt, wenn die axiale Höhe des äußeren Ringmagnets und/oder des inneren Ringmagnets in dem Bereich zwischen einschließlich dem 3-fachen und einschließlich dem 5-fachen der Spaltbreite liegt.

Vorzugsweise werden die axiale Höhe des äußeren Ringmagnets und die axiale Höhe des inneren Ringmagnets gleich groß ausgestaltet.

Im Hinblick auf eine Optimierung der Lagersteifigkeit ist es erfindungsgemäß vorgesehen, dass die in radialer Richtung verlaufende Breite des äußeren Ringmagnets und/oder des inneren Ringmagnets kleiner oder höchstens gleich dem 1,5-fachen der Höhe des jeweiligen Ringmagnets ist. Die radiale Breite eines Ringmagnets ist somit höchstens gleich dem 1,5-fachen seiner Höhe.

Vorzugsweise ist die radiale Breite des äußeren Ringmagnets gleich der radialen Breite des inneren Ringmagnets.

Nachfolgend wird die Erfindung beispielhaft anhand vorteilhafter Ausführungsformen unter Bezugnahme auf die beigefügten Figuren beschrieben. Es zeigen, jeweils schematisch:
- Fig. 1: eine perspektivische Ansicht einer Turbomolekularpumpe,
- Fig. 2: eine Ansicht der Unterseite der Turbomolekularpumpe von Fig. 1,
- Fig. 3: einen Querschnitt der Turbomolekularpumpe längs der in Fig. 2 gezeigten Schnittlinie A-A,
- Fig. 4: eine Querschnittsansicht der Turbomolekularpumpe längs der in Fig. 2 gezeigten Schnittlinie B-B,
- Fig. 5: eine Querschnittsansicht der Turbomolekularpumpe längs der in Fig. 2 gezeigten Schnittlinie C-C, und
- Fig. 6: eine Querschnittsansicht eines Ausschnitts eines erfindungsgemäßen Permanentmagnetlagers.

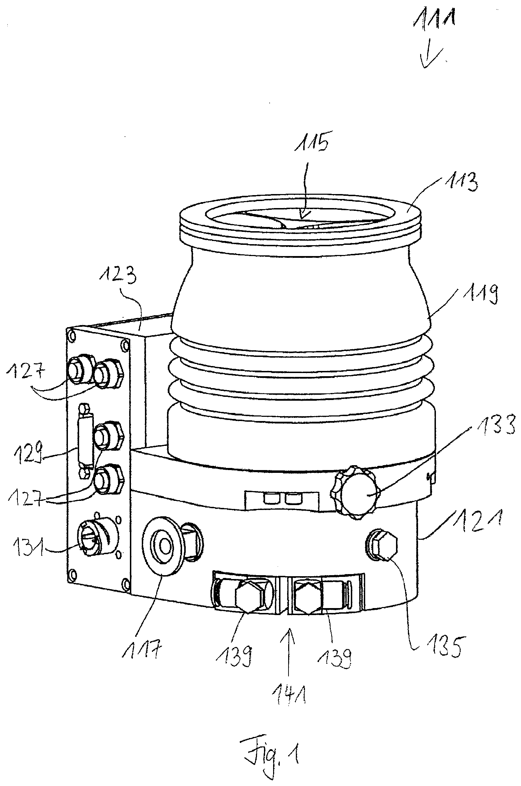

Die in Fig. 1 gezeigte Turbomolekularpumpe 111 umfasst einen von einem Einlassflansch 113 umgebenen Pumpeneinlass 115, an welchen in an sich bekannter Weise ein nicht dargestellter Rezipient angeschlossen werden kann. Das Gas aus dem Rezipienten kann über den Pumpeneinlass 115 aus dem Rezipienten gesaugt und durch die Pumpe hindurch zu einem Pumpenauslass 117 gefördert werden, an den eine Vorvakuumpumpe, wie etwa eine Drehschieberpumpe, angeschlossen sein kann.

Der Einlassflansch 113 bildet bei der Ausrichtung der Vakuumpumpe gemäß Fig. 1 das obere Ende des Gehäuses 119 der Vakuumpumpe 111. Das Gehäuse 119 umfasst ein Unterteil 121, an welchem seitlich ein Elektronikgehäuse 123 angeordnet ist. In dem Elektronikgehäuse 123 sind elektrische und/oder elektronische Komponenten der Vakuumpumpe 111 untergebracht, z.B. zum Betreiben eines in der Vakuumpumpe angeordneten Elektromotors 125. Am Elektronikgehäuse 123 sind mehrere Anschlüsse 127 für Zubehör vorgesehen. Außerdem sind eine Datenschnittstelle 129, z.B. gemäß dem RS485-Standard, und ein Stromversorgungsanschluss 131 am Elektronikgehäuse 123 angeordnet.

Am Gehäuse 119 der Turbomolekularpumpe 111 ist ein Fluteinlass 133, insbesondere in Form eines Flutventils, vorgesehen, über den die Vakuumpumpe 111 geflutet werden kann. Im Bereich des Unterteils 121 ist ferner noch ein Sperrgasanschluss 135, der auch als Spülgasanschluss bezeichnet wird, angeordnet, über welchen Spülgas zum Schutz des Elektromotors 125 vor dem von der Pumpe geförderten Gas in den Motorraum 137, in welchem der Elektromotor 125 in der Vakuumpumpe 111 untergebracht ist, gebracht werden kann. Im Unterteil 121 sind ferner noch zwei Kühlmittelanschlüsse 139 angeordnet, wobei einer der Kühlmittelanschlüsse als Einlass und der andere Kühlmittelanschluss als Auslass für Kühlmittel vorgesehen ist, das zu Kühlzwecken in die Vakuumpumpe geleitet werden kann.

Die untere Seite 141 der Vakuumpumpe kann als Standfläche dienen, sodass die Vakuumpumpe 111 auf der Unterseite 141 stehend betrieben werden kann. Die Vakuumpumpe 111 kann aber auch über den Einlassflansch 113 an einem Rezipienten befestigt werden und somit gewissermaßen hängend betrieben werden. Außerdem kann die Vakuumpumpe 111 so gestaltet sein, dass sie auch in Betrieb genommen werden kann, wenn sie auf andere Weise ausgerichtet ist als in Fig. 1 gezeigt ist. Es lassen sich auch Ausführungsformen der Vakuumpumpe realisieren, bei der die Unterseite 141 nicht nach unten, sondern zur Seite gewandt oder nach oben gerichtet angeordnet werden kann.

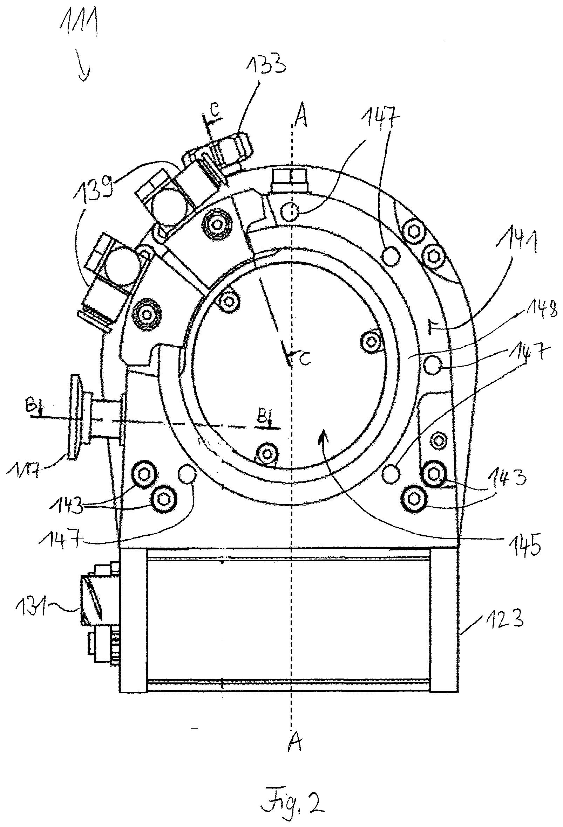

An der Unterseite 141, die in Fig. 2 dargestellt ist, sind noch diverse Schrauben 143 angeordnet, mittels denen hier nicht weiter spezifizierte Bauteile der Vakuumpumpe aneinander befestigt sind. Beispielsweise ist ein Lagerdeckel 145 an der Unterseite 141 befestigt.

An der Unterseite 141 sind außerdem Befestigungsbohrungen 147 angeordnet, über welche die Pumpe 111 beispielsweise an einer Auflagefläche befestigt werden kann.

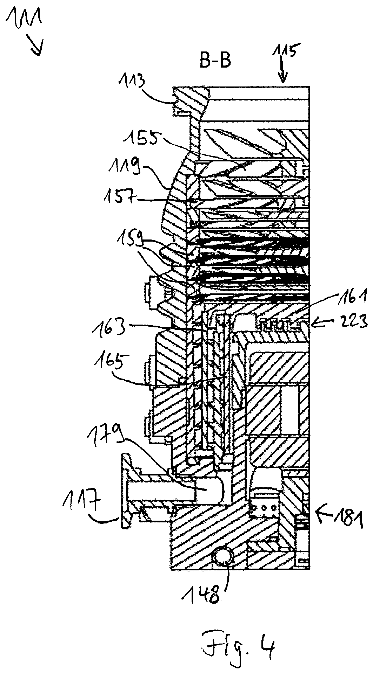

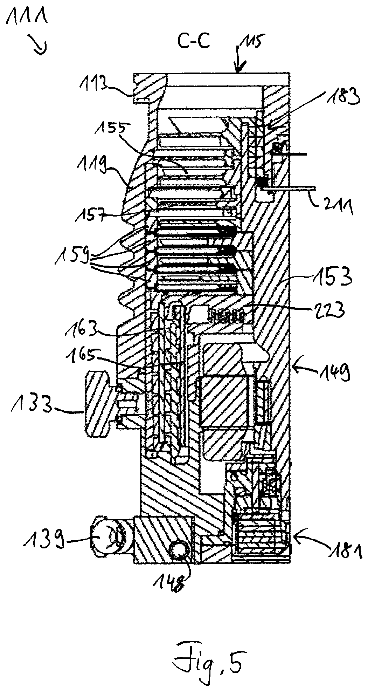

In den Figuren 2 bis 5 ist eine Kühlmittelleitung 148 dargestellt, in welcher das über die Kühlmittelanschlüsse 139 ein- und ausgeleitete Kühlmittel zirkulieren kann.

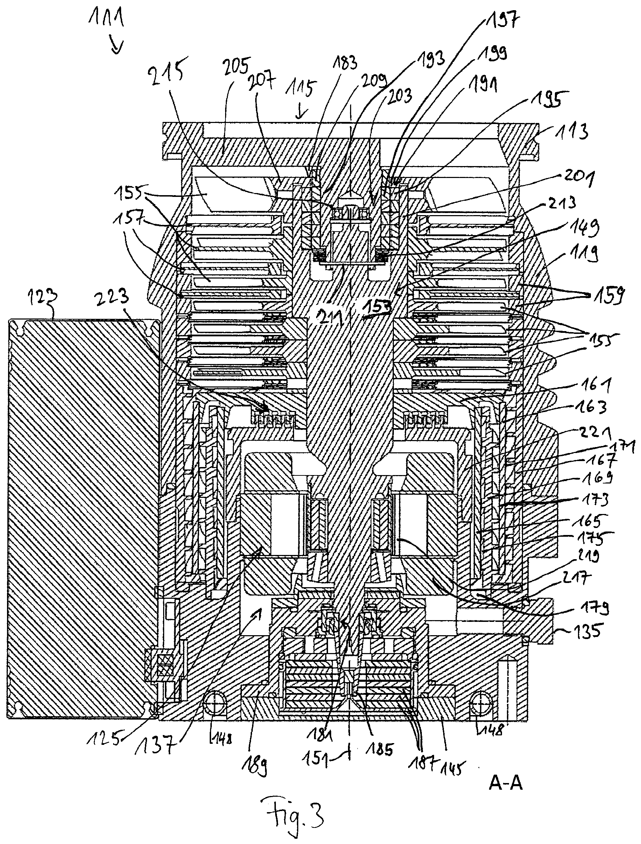

Wie die Schnittdarstellungen der Figuren 3 bis 5 zeigen, umfasst die Vakuumpumpe mehrere Prozessgaspumpstufen zur Förderung des an dem Pumpeneinlass 115 anstehenden Prozessgases zu dem Pumpenauslass 117.

In dem Gehäuse 119 ist ein Rotor 149 angeordnet, der eine um eine Rotationsachse 151 drehbare Rotorwelle 153 aufweist.

Die Turbomolekularpumpe 111 umfasst mehrere pumpwirksam miteinander in Serie geschaltete turbomolekulare Pumpstufen mit mehreren an der Rotorwelle 153 befestigten radialen Rotorscheiben 155 und zwischen den Rotorscheiben 155 angeordneten und in dem Gehäuse 119 festgelegten Statorscheiben 157. Dabei bilden eine Rotorscheibe 155 und eine benachbarte Statorscheibe 157 jeweils eine turbomolekulare Pumpstufe. Die Statorscheiben 157 sind durch Abstandsringe 159 in einem gewünschten axialen Abstand zueinander gehalten.

Die Vakuumpumpe umfasst außerdem in radialer Richtung ineinander angeordnete und pumpwirksam miteinander in Serie geschaltete Holweck-Pumpstufen. Der Rotor der Holweck-Pumpstufen umfasst eine an der Rotorwelle 153 angeordnete Rotornabe 161 und zwei an der Rotornabe 161 befestigte und von dieser getragene zylindermantelförmige Holweck-Rotorhülsen 163, 165, die koaxial zur Rotationsachse 151 orientiert und in radialer Richtung ineinander geschachtelt sind. Ferner sind zwei zylindermantelförmige Holweck-Statorhülsen 167, 169 vorgesehen, die ebenfalls koaxial zu der Rotationsachse 151 orientiert und in radialer Richtung gesehen ineinander geschachtelt sind.

Die pumpaktiven Oberflächen der Holweck-Pumpstufen sind durch die Mantelflächen, also durch die radialen Innen- und/oder Außenflächen, der Holweck-Rotorhülsen 163, 165 und der Holweck-Statorhülsen 167, 169 gebildet. Die radiale Innenfläche der äußeren Holweck-Statorhülse 167 liegt der radialen Außenfläche der äußeren Holweck-Rotorhülse 163 unter Ausbildung eines radialen Holweck-Spalts 171 gegenüber und bildet mit dieser die der Turbomolekularpumpen nachfolgende erste Holweck-Pumpstufe. Die radiale Innenfläche der äußeren Holweck-Rotorhülse 163 steht der radialen Außenfläche der inneren Holweck-Statorhülse 169 unter Ausbildung eines radialen Holweck-Spalts 173 gegenüber und bildet mit dieser eine zweite Holweck-Pumpstufe. Die radiale Innenfläche der inneren Holweck-Statorhülse 169 liegt der radialen Außenfläche der inneren Holweck-Rotorhülse 165 unter Ausbildung eines radialen Holweck-Spalts 175 gegenüber und bildet mit dieser die dritte Holweck-Pumpstufe.

Am unteren Ende der Holweck-Rotorhülse 163 kann ein radial verlaufender Kanal vorgesehen sein, über den der radial außenliegende Holweck-Spalt 171 mit dem mittleren Holweck-Spalt 173 verbunden ist. Außerdem kann am oberen Ende der inneren Holweck-Statorhülse 169 ein radial verlaufender Kanal vorgesehen sein, über den der mittlere Holweck-Spalt 173 mit dem radial innenliegenden Holweck-Spalt 175 verbunden ist. Dadurch werden die ineinander geschachtelten Holweck-Pumpstufen in Serie miteinander geschaltet. Am unteren Ende der radial innenliegenden Holweck-Rotorhülse 165 kann ferner ein Verbindungskanal 179 zum Auslass 117 vorgesehen sein.

Die vorstehend genannten pumpaktiven Oberflächen der Holweck-Statorhülsen 163, 165 weisen jeweils mehrere spiralförmig um die Rotationsachse 151 herum in axialer Richtung verlaufende Holweck-Nuten auf, während die gegenüberliegenden Mantelflächen der Holweck-Rotorhülsen 163, 165 glatt ausgebildet sind und das Gas zum Betrieb der Vakuumpumpe 111 in den Holweck-Nuten vorantreiben.

Zur drehbaren Lagerung der Rotorwelle 153 sind ein Wälzlager 181 im Bereich des Pumpenauslasses 117 und ein Permanentmagnetlager 183 im Bereich des Pumpeneinlasses 115 vorgesehen.

Im Bereich des Wälzlagers 181 ist an der Rotorwelle 153 eine konische Spritzmutter 185 mit einem zu dem Wälzlager 181 hin zunehmenden Außendurchmesser vorgesehen. Die Spritzmutter 185 steht mit mindestens einem Abstreifer eines Betriebsmittelspeichers in gleitendem Kontakt. Der Betriebsmittelspeicher umfasst mehrere aufeinander gestapelte saugfähige Scheiben 187, die mit einem Betriebsmittel für das Wälzlager 181, z.B. mit einem Schmiermittel, getränkt sind.

Im Betrieb der Vakuumpumpe 111 wird das Betriebsmittel durch kapillare Wirkung von dem Betriebsmittelspeicher über den Abstreifer auf die rotierende Spritzmutter 185 übertragen und in Folge der Zentrifugalkraft entlang der Spritzmutter 185 in Richtung des größer werdenden Außendurchmessers der Spritzmutter 92 zu dem Wälzlager 181 hin gefördert, wo es z.B. eine schmierende Funktion erfüllt. Das Wälzlager 181 und der Betriebsmittelspeicher sind durch einen wannenförmigen Einsatz 189 und den Lagerdeckel 145 in der Vakuumpumpe eingefasst.

Das Permanentmagnetlager 183 umfasst eine rotorseitige Lagerhälfte 191 und eine statorseitige Lagerhälfte 193, welche jeweils einen Ringstapel aus mehreren in axialer Richtung aufeinander gestapelten permanentmagnetischen Ringen 195, 197 umfassen. Die Ringmagnete 195, 197 liegen einander unter Ausbildung eines radialen Lagerspalts 199 gegenüber, wobei die rotorseitigen Ringmagnete 195 radial außen und die statorseitigen Ringmagnete 197 radial innen angeordnet sind. Das in dem Lagerspalt 199 vorhandene magnetische Feld ruft magnetische Abstoßungskräfte zwischen den Ringmagneten 195, 197 hervor, welche eine radiale Lagerung der Rotorwelle 153 bewirken. Die rotorseitigen Ringmagnete 195 sind von einem Trägerabschnitt 201 der Rotorwelle 153 getragen, welcher die Ringmagnete 195 radial außenseitig umgibt. Die statorseitigen Ringmagnete 197 sind von einem statorseitigen Trägerabschnitt 203 getragen, welcher sich durch die Ringmagnete 197 hindurch erstreckt und an radialen Streben 205 des Gehäuses 119 aufgehängt ist. Parallel zu der Rotationsachse 151 sind die rotorseitigen Ringmagnete 195 durch ein mit dem Trägerabschnitt 203 gekoppeltes Deckelelement 207 festgelegt. Die statorseitigen Ringmagnete 197 sind parallel zu der Rotationsachse 151 in der einen Richtung durch einen mit dem Trägerabschnitt 203 verbundenen Befestigungsring 209 sowie einen mit dem Trägerabschnitt 203 verbundenen Befestigungsring 211 festgelegt. Zwischen dem Befestigungsring 211 und den Ringmagneten 197 ist eine Tellerfeder 213 vorgesehen.

Innerhalb des Magnetlagers ist ein Not- bzw. Fanglager 215 vorgesehen, welches im normalen Betrieb der Vakuumpumpe 111 ohne Berührung leer läuft und erst bei einer übermäßigen radialen Auslenkung des Rotors 149 relativ zu dem Stator in Eingriff gelangt, um einen radialen Anschlag für den Rotor 149 zu bilden, da eine Kollision der rotorseitigen Strukturen mit den statorseitigen Strukturen verhindert wird. Das Fanglager 215 ist als ungeschmiertes Wälzlager ausgebildet und bildet mit dem Rotor 149 und/oder dem Stator einen radialen Spalt, welcher bewirkt, dass das Fanglager 215 im normalen Pumpbetrieb außer Eingriff ist. Die radiale Auslenkung, bei der das Fanglager 215 in Eingriff gelangt, ist groß genug bemessen, sodass das Fanglager 215 im normalen Betrieb der Vakuumpumpe nicht in Eingriff gelangt, und gleichzeitig klein genug, sodass eine Kollision der rotorseitigen Strukturen mit den statorseitigen Strukturen unter allen Umständen verhindert wird.

Die Vakuumpumpe 111 umfasst den Elektromotor 125 zum drehenden Antreiben des Rotors 149. Der Anker des Elektromotors 125 ist durch den Rotor 149 gebildet, dessen Rotorwelle 153 sich durch den Motorstator 217 hindurch erstreckt. Auf den sich durch den Motorstator 217 hindurch erstreckenden Abschnitt der Rotorwelle 153 kann radial außenseitig oder eingebettet eine Permanentmagnetanordnung angeordnet sein. Zwischen dem Motorstator 217 und dem sich durch den Motorstator 217 hindurch erstreckenden Abschnitt des Rotors 149 ist ein Zwischenraum 219 angeordnet, welcher einen radialen Motorspalt umfasst, über den sich der Motorstator 217 und die Permanentmagnetanordnung zur Übertragung des Antriebsmoments magnetisch beeinflussen können.

Der Motorstator 217 ist in dem Gehäuse innerhalb des für den Elektromotor 125 vorgesehenen Motorraums 137 festgelegt. Über den Sperrgasanschluss 135 kann ein Sperrgas, das auch als Spülgas bezeichnet wird, und bei dem es sich beispielsweise um Luft oder um Stickstoff handeln kann, in den Motorraum 137 gelangen. Über das Sperrgas kann der Elektromotor 125 vor Prozessgas, z.B. vor korrosiv wirkenden Anteilen des Prozessgases, geschützt werden. Der Motorraum 137 kann auch über den Pumpenauslass 117 evakuiert werden, d.h. im Motorraum 137 herrscht zumindest annäherungsweise der von der am Pumpenauslass 117 angeschlossenen Vorvakuumpumpe bewirkte Vakuumdruck.

Zwischen der Rotornabe 161 und einer den Motorraum 137 begrenzenden Wandung 221 kann außerdem eine sog. und an sich bekannte Labyrinthdichtung 223 vorgesehen sein, insbesondere um eine bessere Abdichtung des Motorraums 217 gegenüber den radial außerhalb liegenden Holweck-Pumpstufen zu erreichen.

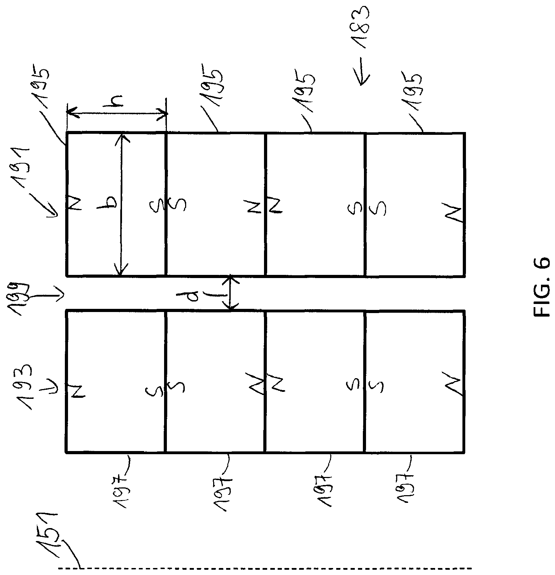

Der in Fig. 6 im Querschnitt gezeigte Ausschnitt eines erfindungsgemäßen Permanentmagnetlagers 183 weist entsprechend den vorstehenden Ausführungen eine rotorseitige Lagerhälfte 191 und eine statorseitige Lagerhälfte 193 auf. Die statorseitige Lagerhälfte 193 weist vier Ringmagnete 197 auf und die rotorseitige Lagerhälfte 191 weist ebenfalls vier Ringmagnete 195 auf. Es kann aber auch eine andere Anzahl an Ringmagneten 195, 197 vorgesehen sein, da die genannte Anzahl an jeweils vier Ringmagneten nur der Illustration dient.

Wie in Fig. 6 eingezeichnet ist, weisen zueinander benachbarte Ringmagnete 197 der statorseitigen Lagerhälfte 193 eine wechselseitige Polung auf. Betrachtet man z.B. den oberen Ringmagneten 197 der statorseitigen Lagerhälfte 193 sowie den dazu benachbarten zweitobersten Ringmagneten 197, so ist zu sehen, dass die Südpole S der beiden Ringmagnete aneinander liegen. Außerdem liegen die Nordpole N des zweitobersten Ringmagnets 197 und des drittobersten Ringmagnets 197 aneinander. Ferner liegen die Südpole S des untersten Ringmagnets 197 und des zweituntersten Ringmagnets 197 aneinander. Entsprechendes gilt für die Ringmagnete 195 der rotorseitigen Lagerhälfte 191.

Zwischen der rotorseitigen Lagerhälfte 191 und der statorseitigen Lagerhälfte 193 ist der Lagerspalt 199 vorgesehen. Bei dem Lagerspalt 199 handelt es sich um einen ringförmigen Spalt, der von der nach radial außen gewandten Außenseite der inneren Ringmagnete 197 und der gegenüberliegenden, nach radial innen gewandten Innenseite der äußeren Ringmagnete 195 in radialer Richtung verläuft. Der Begriff "radiale Richtung" bezieht sich auf die Rotationsachse 151 (vgl. Fig. 3), bzw. auf die im Idealfall mit der Rotationsachse 151 zusammenfallenden axialen Mittelachsen der Ringmagnete 195, 197.

Der radiale Spalt 199 weist eine in radialer Richtung verlaufende Spaltbreite d auf. Die äußeren Ringmagnete 195 und die inneren Ringmagnete 197 sind so dimensioniert, dass deren jeweilige in axialer Richtung - bezogen auf die Rotationsachse 151 bzw. auf die mit der Rotationsachse zusammenfallenden axialen Mittelachsen der Ringmagnete - verlaufende Höhe h im Bereich zwischen einschließlich dem 3-fachen und einschließlich dem 5-fachen der Spaltbreite d liegt.

Außerdem weisen die Ringmagnete 195, 197 eine in radialer Richtung verlaufende Breite b auf, die kleiner oder höchstens gleich dem 1,5-fachen der Höhe h der Ringmagnete 195, 197 ist. Erfindungsgemäß ist die Breite b der äußeren Ringmagnete 195 und der inneren Ringmagnete größer oder höchstens gleich dem 1,2-fachen der Höhe h.

Die Ringmagnete 195 bilden einen Stapel von äußeren Ringmagneten 195 und die Ringmagnete 197 bilden einen Stapel von inneren Ringmagneten 197, bei denen jeder Ringmagnet dieselbe axiale Höhe h und dieselbe radiale Breite b aufweist.

Vorteilhaft an dem Permanentmagnetlager der Fig. 6 ist, dass es eine besonders gute Lagersteifigkeit aufweist, sodass es sich besonders gut zur drehbaren Lagerung eines Rotors einer Turbomolekularpumpe eignet.

### Bezugszeichenliste

- 111: Turbomolekularpumpe
- 113: Einlassflansch
- 115: Pumpeneinlass
- 117: Pumpenauslass
- 119: Gehäuse
- 121: Unterteil
- 123: Elektronikgehäuse
- 125: Elektromotor
- 127: Zubehöranschluss
- 129: Datenschnittstelle
- 131: Stromversorgungsanschluss
- 133: Fluteinlass
- 135: Sperrgasanschluss
- 137: Motorraum
- 139: Kühlmittelanschluss
- 141: Unterseite
- 143: Schraube
- 145: Lagerdeckel
- 147: Befestigungsbohrung
- 148: Kühlmittelleitung
- 149: Rotor
- 151: Rotationsachse
- 153: Rotorwelle
- 155: Rotorscheibe
- 157: Statorscheibe
- 159: Abstandsring
- 161: Rotornabe
- 163: Holweck-Rotorhülse
- 165: Holweck-Rotorhülse
- 167: Holweck-Statorhülse
- 169: Holweck-Statorhülse
- 171: Holweck-Spalt
- 173: Holweck-Spalt
- 175: Holweck-Spalt
- 179: Verbindungskanal
- 181: Wälzlager
- 183: Permanentmagnetlager
- 185: Spritzmutter
- 187: Scheibe
- 189: Einsatz
- 191: rotorseitige Lagerhälfte
- 193: statorseitige Lagerhälfte
- 195: Ringmagnet
- 197: Ringmagnet
- 199: Lagerspalt
- 201: Trägerabschnitt
- 203: Trägerabschnitt
- 205: radiale Strebe
- 207: Deckelelement
- 209: Stützring
- 211: Befestigungsring
- 213: Tellerfeder
- 215: Not-bzw. Fanglager
- 217: Motorstator
- 219: Zwischenraum
- 221: Wandung
- 223: Labyrinthdichtung
- d: Spaltbreite
- h: axiale Höhe
- b: radiale Breite
- N: Nordpol
- S: Südpol

## Patentansprüche

1. Turbomolekularpumpe, umfassend wenigstens ein Permanentmagnetlager (183) zur drehbaren Lagerung eines Rotors (149) der Turbomolekularpumpe, wobei das Permanentmagnetlager (183) umfasst:
wenigstens einen zur Anordnung an einem Stator der Vakuumpumpe vorgesehenen statorseitigen Ringmagnet (197) und einen zur Anordnung an dem Rotor (149) der Vakuumpumpe vorgesehenen rotorseitigen Ringmagnet (195), wobei einer der beiden Ringmagnete ein innerer Ringmagnet (197) ist, welcher radial innerhalb des anderen, äußeren Ringmagnets (195) und konzentrisch mit dem äußeren Ringmagnet (195) derart angeordnet ist, dass zwischen der nach radial außen gewandten Außenseite des inneren Ringmagnets (197) und der gegenüberliegenden, nach radial innen gewandten Innenseite des äußeren Ringmagnets (195) ein radialer Spalt (199) mit einer in radialer Richtung verlaufenden Spaltbreite (d) gebildet wird, wobei der äußere Ringmagnet (195) und der innere Ringmagnet (197) eine in axialer Richtung verlaufende Höhe (h) aufweist, die im Bereich zwischen einschließlich dem 3-fachen und einschließlich dem 5-fachen der Spaltbreite (d) liegt; und
wobei die in radialer Richtung verlaufende Breite (b) des äußeren Ringmagnets (195) und des inneren Ringmagnets (197) kleiner oder höchstens gleich dem 1,5-fachen der Höhe (h) des jeweiligen Ringmagnets (195, 197) ist;
**dadurch gekennzeichnet, dass**
die in radialer Richtung verlaufende Breite (b) des äußeren Ringmagnets (195) und des inneren Ringmagnets (197) größer oder höchstens gleich dem 1,2-fachen der Höhe (h) des jeweiligen Ringmagnets (195, 197) ist;
wobei das Permanentmagnetlager (183) einen Stapel von äußeren Ringmagneten (195) und einen Stapel von inneren Ringmagneten (197) umfasst, wobei jeder Ringmagnet des Stapels von äußeren Ringmagneten (195) und jeder Ringmagnet des Stapels von inneren Ringmagneten (197) eine jeweilige axiale Höhe (h) aufweist, die zwischen einschließlich dem 3-fachen und einschließlich dem 5-fachen der Spaltbreite (d) liegt, und wobei jeder Ringmagnet des Stapels von äußeren Ringmagneten (195) und jeder Ringmagnet des Stapels von inneren Ringmagneten (197) eine jeweilige in radialer Richtung verlaufende Breite (b) aufweist, die zwischen einschließlich dem 1,2-fachen und einschließlich dem 1,5-fachen der Höhe (h) der Ringmagnete (195, 197) des jeweiligen Stapels liegt;
wobei die äußeren Ringmagnete (195) von einem rotorseitigen Trägerabschnitt (201) getragen sind, welcher die äußeren Ringmagnete (195) radial außenseitig umgibt;
wobei die inneren Ringmagnete (197) von einem statorseitigen Trägerabschnitt (203) getragen sind, welcher sich durch die inneren Ringmagnete (197) hindurch erstreckt und an radialen Streben (205) eines Gehäuses (119) der Turbomolekularpumpe aufgehängt ist;
wobei die äußeren Ringmagnete (195) durch ein mit dem rotorseitigen Trägerabschnitt (201) gekoppeltes Deckelelement (207) parallel zur Rotationsachse (151) des Rotors (149) festgelegt sind;
wobei die inneren Ringmagnete (197) parallel zu der Rotationsachse (151) des Rotors (149) in der einen Richtung durch einen mit dem statorseitigen Trägerabschnitt (203) verbundenen ersten Befestigungsring (209) und in der anderen Richtung durch einen mit dem statorseitigen Trägerabschnitt (203) verbundenen zweiten Befestigungsring (211) festgelegt sind;
wobei zwischen dem zweiten Befestigungsring (211) und den inneren Ringmagneten (197) eine Tellerfeder (213) vorgesehen ist; und
wobei innerhalb des Permanentmagnetlagers (183) ein als ungeschmiertes Wälzlager ausgebildetes Fanglager (215) vorgesehen ist, das mit dem Rotor (149) und/oder mit dem Stator einen radialen Spalt bildet.

2. Turbomolekularpumpe nach Anspruch 1,
**dadurch gekennzeichnet, dass**
die in radialer Richtung verlaufende Breite (b) des äußeren Ringmagnets (195) und/oder des inneren Ringmagnets (197) größer oder höchstens gleich dem 1,3-fachen der Höhe (h) des jeweiligen Ringmagnets (195, 197) ist.

## Claims

1. A turbomolecular pump comprising at least one permanent magnet bearing (183) for the rotatable support of a rotor (149) of the turbomolecular pump, wherein the permanent magnet bearing (183) comprises:
at least one stator-side ring magnet (197) provided for arrangement at a stator of the vacuum pump and one rotor-side ring magnet (195) provided for arrangement at the rotor (149) of the vacuum pump, wherein one of the two ring magnets is an inner ring magnet (197) which is arranged radially within the other, outer ring magnet (195) and concentrically with the outer ring magnet (195) such that a radial gap (199) having a gap width (d) extending in a radial direction is formed between the radially outwardly facing outer side of the inner ring magnet (197) and the oppositely disposed, radially inwardly facing inner side of the outer ring magnet (195); wherein the outer ring magnet (195) and the inner ring magnet (197) have a height (h) which extends in an axial direction and which is in a range between 3 times and 5 times, inclusive, of the gap width (d); and
wherein the width (b) of the outer ring magnet (195) and the inner ring magnet (197) extending in the radial direction is smaller than or at most equal to 1.5 times the height (h) of the respective ring magnet (195, 197),
**characterized in that**
the width (b) of the outer ring magnet (195) and the inner ring magnet (197) extending in the radial direction is larger than or at most equal to 1.2 times the height (h) of the respective ring magnet (195, 197);
wherein the permanent magnet bearing (183) comprises a stack of outer ring magnets (195) and a stack of inner ring magnets (197), wherein each ring magnet of the stack of outer ring magnets (195) and each ring magnet of the stack of inner ring magnets (197) has/have a respective axial height (h) which is between 3 times and 5 times, inclusive, of the gap width (d), and wherein each ring magnet of the stack of outer ring magnets (195) and each ring magnet of the stack of inner ring magnets (197) have a respective width (b) which extends in the radial direction and which is between 1.2 times and 1.5 times, inclusive, of the height (h) of the ring magnets (195, 197) of the respective stack;
wherein the outer rings magnets (195) are carried by a rotor-side carrier section (201) which surrounds the outer ring magnets (195) at the radial outer side;
wherein the inner ring magnets (197) are carried by a stator-side carrier section (208) which extends through the inner ring magnets (197) and which is suspended at radial struts (205) of a housing (119) of the turbomolecular pump;
wherein the outer ring magnets (195) are fixed parallel to the axis of rotation (151) of the rotor (149) by a cover element (207) coupled to the rotor-side carrier section (201);
wherein the inner ring magnets (197) are fixed parallel to the axis of rotation (151) of the rotor (149) in the one direction by a first fastening ring (209), which is connected to the stator-side carrier section (203), and in the other direction by a second fastening ring (211) which is connected to the stator-side carrier section (203);
wherein a disk spring (213) is provided between the second fastening ring (211) and the inner ring magnets (197); and
wherein a safety bearing (215) configured as a non-lubricated rolling element bearing is provided within the permanent magnet bearing (183) and forms a radial gap with the rotor (149) and/or with the stator.

2. A turbomolecular pump according to claim 1,
**characterized in that**
the width (b) of the outer ring magnet (195) and/or of the inner ring magnet (197) extending in the radial direction is dimensioned such that it is larger than or at most equal to 1.3 times the height (h) of the respective ring magnet (195, 197).

## Revendications

1. Pompe turbomoléculaire comprenant au moins un palier à aimant permanent (183) destiné à supporter en rotation un rotor (149) de la pompe turbomoléculaire, dans laquelle le palier à aimant permanent (183) comprend :
au moins un aimant annulaire côté stator (197) prévu pour être disposé sur un stator de la pompe à vide et un aimant annulaire côté rotor (195) prévu pour être disposé sur le rotor (149) de la pompe à vide, l'un des deux aimants annulaires étant un aimant annulaire intérieur (197) qui est disposé radialement à l'intérieur de l'autre aimant annulaire extérieur (195) et concentriquement à l'aimant annulaire extérieur (195) de telle sorte qu'une fente radiale (199) avec une largeur de fente (d) s'étendant dans la direction radiale est formée entre le côté extérieur tourné radialement vers l'extérieur de l'aimant annulaire intérieur (197) et le côté intérieur opposé, tourné radialement vers l'intérieur, de l'aimant annulaire extérieur (195), l'aimant annulaire extérieur (195) et l'aimant annulaire intérieur (197) présentant une hauteur (h) s'étendant dans la direction axiale qui se situe dans une plage comprise entre y compris 3 fois et y compris 5 fois la largeur de fente (d) ;
et dans laquelle la largeur (b) s'étendant dans la direction radiale de l'aimant annulaire extérieur (195) et de l'aimant annulaire intérieur (197) est inférieure ou au plus égale à 1,5 fois la hauteur (h) de l'aimant annulaire respectif (195, 197) ;
**caractérisée en ce que**
la largeur (b) s'étendant dans la direction radiale de l'aimant annulaire extérieur (195) et de l'aimant annulaire intérieur (197) est supérieure ou au plus égale à 1,2 fois la hauteur (h) de l'aimant annulaire respectif (195, 197) ;
dans laquelle le palier à aimant permanent (183) comprend un empilement d'aimants annulaires extérieurs (195) et un empilement d'aimants annulaires intérieurs (197) et chaque aimant annulaire de l'empilement d'aimants annulaires extérieurs (195) et chaque aimant annulaire de l'empilement d'aimants annulaires intérieurs (197) présente une hauteur axiale respective (h) qui se situe entre y compris 3 fois et y compris 5 fois la largeur de fente (d), et dans laquelle chaque aimant annulaire de l'empilement d'aimants annulaires extérieurs (195) et chaque aimant annulaire de l'empilement d'aimants annulaires intérieurs (197) présente une largeur respective (b) s'étendant dans la direction radiale qui se situe entre y compris 1,2 fois et y compris 1,5 fois la hauteur (h) des aimants annulaires (195, 197) de l'empilement respectif ;
dans laquelle les aimants annulaires extérieurs (195) sont supportés par une partie de support côté rotor (201) qui entoure radialement à l'extérieur les aimants annulaires extérieurs (195) ;
dans laquelle les aimants annulaires intérieurs (197) sont supportés par une partie de support côté stator (203) qui s'étend à travers les aimants annulaires intérieurs (197) et est suspendue à des entretoises radiales (205) d'un boîtier (119) de la pompe turbomoléculaire ;
dans laquelle les aimants annulaires extérieurs (195) sont fixés parallèlement à l'axe de rotation (151) du rotor (149) par un élément de couvercle (207) couplé à la partie de support côté rotor (201) ;
dans laquelle les aimants annulaires intérieurs (197) sont fixés parallèlement à l'axe de rotation (151) du rotor (149) dans une direction par une première bague de fixation (209) reliée à la partie de support côté stator (203) et dans l'autre direction par une deuxième bague de fixation (211) reliée à la partie de support côté stator (203) ;
dans laquelle une rondelle élastique (213) est prévue entre la deuxième bague de fixation (211) et les aimants annulaires intérieurs (197) ; et
dans laquelle un palier de réception (215) réalisé sous la forme d'un palier à roulement non lubrifié est prévu à l'intérieur du palier à aimant permanent (183) et forme une fente radiale avec le rotor (149) et/ou avec le stator.

2. Pompe turbomoléculaire selon la revendication 1,
**caractérisée en ce que**
la largeur (b) s'étendant dans la direction radiale de l'aimant annulaire extérieur (195) et/ou de l'aimant annulaire intérieur (197) est supérieure ou au plus égale à 1,3 fois la hauteur (h) de l'aimant annulaire respectif (195, 197).
